# EUROPEAN PATENT SPECIFICATION

(11) **EP 1 966 711 B1**
(45) Date of publication and mention of the grant of the patent: **06.05.2015**
(21) Application number: 06817381.4
(22) Date of filing: 27.10.2006
(51) Int. Cl.: G06F 15/16, H04L 29/08, H04L 29/06

(54) **TRAFFIC DISTRIBUTION IN A COMMUNICATIONS NETWORK**
VERKEHRSVERTEILUNG IN EINEM KOMMUNIKATIONSNETZ
RÉPARTITION DU TRAFIC DANS UN RÉSEAU DE COMMUNICATIONS

(30) Priority: 29.12.2005 US 322168
(43) Date of publication of application: 10.09.2008
(73) Proprietor: Level 3 Communications, LLC, Broomfield, CO 80021 (US)
(72) Inventor: TERPSTRA, Rich, Superior, Colorado 80027 (US); WANG, Jin-Gen, Lafayette, Colorado 80026 (US)
(74) Representative: Martin, Philip John
(86) International application number: PCT/US2006/041701
(87) International publication number: WO 2007/078388

(56) References cited:
- EP-A2- 1 235 409
- WO-A2-2005/084128
- GB-A- 2 380 894
- US-B1- 6 691 165
- US-B1- 6 711 159
- US-B1- 6 859 842
- US-B1- 6 904 017
- US-B1- 6 904 017

## Description

### FIELD

Various embodiments of the present invention generally relate to systems and methods for implementing telecommunications. More specifically, embodiments relate to systems and methods for distributing traffic within a telecommunications network.

### BACKGROUND

In the field of telecommunications, communication sessions are typically established over a number of interconnected networks. Some of these networks may be packet-based, and others may be switch-based networks. In packet-based networks a communication session ingresses the network at a point and egresses the network at a point. For example, in a voice over Internet protocol (VOIP) network, a communication session request may enter the network through a load balancer, which returns a list of Internet protocol (IP) media gateway controllers (MGCs) to the calling party. The calling party then determines an ingress IP MGC to which the call should be directed based on the proximity of calling party to each IP MGC. As such, conventional methods and systems for selecting an IP MGC have typically been based on the present location of the caller. As a result, server loading problems have arisen, and debugging these problems has been difficult, due in part to the mobility of typical VOIP users.

In a VOIP environment that uses the session initiation protocol (SIP), a caller's VOIP phone, or terminal adapter, periodically registers with a network registrar (e.g., registration server/database). By registering, the VOIP device notifies the registrar of the current location of the device. Later, when a call is placed using the device, the registrar is accessed to determine the current location of the device; using the current location, an IP MGC is selected for accessing the network. For example, if the VOIP device is in Los Angeles (LA), an IP MGC in LA might be chosen to route the communication session through, because the VOIP device is geographically closest to the LA IP MGC.

At least one consequence of this method of selecting an IP MGC is the difficulty in predicting 'a priori' the load that will arise on any given IP MGC. In the case of mobile VOIP devices, their users may travel to different unpredictable geographic regions at various unpredictable times. At any given time, certain IP MGCs may be overloaded, while others have significant resource availability. Because the nature of the mobility is unpredictable, it can be difficult to know ahead of time the types or amounts of resources that should be devoted to each network ingress point. As a result, quality of service may be seriously impacted for communications sessions established through overloaded network ingress points while available resources go unused.

Another consequence relates to determining the cause of overloading. Debugging overloading problems is also made difficult by the unpredictability of the movement of VOIP devices. For example, it may be thought that an IP MGC may have a technical problem that requires repair, while in reality, the "problem" is overloading due to a sudden burst of caller demand in an area near the IP MGC. In addition, because VoIP terminal adapters typically are hard coded with a single IP address to get them to a specific IP MGC/IP MG, debugging problems can be further complicated.

The Document GB 2380894 ("APPARATUS FOR DELIVERY OF MULTIPLE MEDIA DATA STREAMS") discloses a method for establishing a communication session for a mobile terminal by selecting an MGC based on the monitored load parameters of the MGs associated with the MGC.

Document US6904017 ("METHOD AND APPARATUS TO PROVIDE CENTRALIZED CALL ADMISSION CONTROL OVER LOAD BALANCING FOR A VOICE-OVER-IP NETWORK") discloses a dynamic load balancing method for VOIP calls based on a central database storing information including cost data associated with individual paths that could be chosen to route calls.

Document WO 2005/084128 ("INTEGRATION OF PACKET AND CELLULAR TELEPHONE NETWORKS") discloses a method for coupling a packet switch and a circuit switch via a convergence processor to integrate packet and cellular networks with dynamic call routing.

### SUMMARY

Systems and methods are described for dynamically establishing a communications session based on criteria other than the caller's current geographic location. According to some embodiments, an accessing module is configured to receive a request to establish a communications session between an origination endpoint and a destination endpoint and selects a processing server through which to setup the communication session. The selection of the processing server may be made based on a property of the origination end point. Such an approach can provide *a priori* knowledge of processing server loading.

In accordance with some embodiments, a path in a communications network may be determined by selecting an IP Media Gateway Controller (IP MGC) from a plurality of IP MGCs. In various embodiments, the selecting of the IP MGC may be based, at least in part, on a property of the origination endpoint such as geographic location, NPA, screen name, country code, and/or the like. In one or more embodiments, the selecting of the path in the communications network further includes selecting an interface module, such as a session border controller, communicably coupled to the accessing module and the selected IP MGC. Then, the communication session between the origination endpoint and the destination endpoint may be established by routing the invitation or communication session through the selected path in the communications network.

In various embodiments, the communications network may be a packet based network. As such, in some cases, the request to establish a communications session comprises a session initiation protocol (SIP) invite message. In other embodiments, the origination endpoint may be mobile and may send the request from a second geographic location different from a first geographic location corresponding to a primary origin location.

In accordance with some embodiments, the interface module that is geographically closest to the accessing module may be selected. In other embodiments, the interface module with the least load may be chosen.

Various embodiments provide for a communications system including one or more of the following, IP Media Gateway Controller (IP MGC), a communications network, one or more origination communicators, one or more destination communicators, a database configured to hold an access control list, one or more interface modules including ports, wherein each port may be associated with and communicably coupled to one of the plurality of processing servers, and one or more accessing modules configured to receive a communications request from an origination endpoint.

According to some embodiments, the accessing modules may share an internet protocol (IP) address using Open Shortest Path First (OSPF) protocol. In some embodiments, a domain name server (DNS) may be utilized to determine which one of the plurality of accessing modules the communications request should be routed to. Still yet, in other embodiments, the accessing modules may use an anycast address.

A more complete understanding of various embodiments of the present invention may be derived by referring to the detailed description of preferred embodiments and claims when considered in connection with the figures.

### BRIEF DESCRIPTION OF THE DRAWINGS

In the Figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
Fig. 1 illustrates a high level system diagram which may be used in accordance with some embodiments of the present invention;
Fig. 2 illustrates an exemplary call flow from an origination endpoint outside the communication network through the system described in Fig. 1 which may be used in accordance with one or more embodiments of the present invention;
Fig. 3 illustrates an exemplary outgoing communication session call flow through the communication network described in Fig. 1 which may be used in accordance with various embodiments of the present invention;
Fig. 4 illustrates an exemplary system diagram which may be used in accordance with some embodiments of the present invention;
Fig. 5 illustrates an exemplary incoming communication session call flow through the communication network described in Fig. 4 which may be used in accordance with one or more embodiments of the present invention;
Fig. 6 illustrates an exemplary outgoing communication session call flow through the communication network described in Fig. 4 which may be used in accordance with one or more embodiments of the present invention;
Fig. 7 is an exemplary flow diagram illustrating the functionality of an accessing module which may be used in accordance with various embodiments of the present invention; and
Fig. 8 illustrates an example of a computer system with which embodiments of the present invention may be utilized.

### DETAILED DESCRIPTION

Various embodiments of the present invention generally relate to systems and methods for implementing telecommunications. More specifically, embodiments relate to systems and methods for distributing traffic within a telecommunications network.

Historically, communications networks have used "wireline" like service to provide communicator registration capability. In such approaches a registrar typically hosts the authentication for each proxy to a customer provided feature server. While this concept is sufficient for non-mobile communicators, mobile communicators can cause unpredictable loads to feature servers and cause instability or failure. Without a highly available feature server that does not congest and a communication network that does not congest or fail, PSTN-level service may not be provided for mobile communicators without the elimination of these traditional points of failure.

In accordance with various embodiments of the present invention, systems and methods for dynamically routing a communications session within a telecommunications network are described. For example, systems and methods are described which provide the customers of a telecommunication network a logical single interface to the telecommunications network.

In some embodiments, the logical interface comprises one or more accessing modules. When there are more than one accessing module, a common internet protocol (IP) address, such as an anycast address, is assigned to each accessing module. Routers within the network route the communication session or request to the closest accessing module. The accessing modules, according to some embodiments, utilize a stateless SIP proxy or SIP Redirect Server that chooses the path to send the customer into the network. The path consists of a prioritized list of IP addresses, such that if one address fails the accessing module tries another. In various embodiments, the accessing modules may also be configured to distribute traffic across multiple interface modules and multiple processing servers based on a hashing algorithm. Therefore, one advantage of this system is that it provides a higher availability of service to the customer

According to various embodiments, the accessing module may be configured to record itself into the network communication flow. For example, some embodiments render endpoint level provisioning unnecessary on the accessing module. As such, for calls going to a customer or endpoint from within the communications network, the processing server may determine which customer or endpoint should receive the communication. Once this determination is made, the interface module transmits this information to the accessing module. In some embodiments, this determination may be made by using SIP Route header or SIP Request-URI header. For calls coming from an endpoint, the accessing module selects the interface module and the processing server to be used in order to route the communication session to the desired destination endpoint. In some embodiments, the accessing modules may be logically positioned behind one or more interface modules. In addition, the accessing modules may be configured to select a processing server based on a configurable hash key. For example, according to one embodiment, the accessing modules may use part of the information contained within the user part of a From Header of a SIP message. According to other embodiments, the country code, NPA, screen name, and/or the like may be used in determining the processing server to be used. If no match is found for the configurable hash key, a default route may be used.

In other embodiments, the accessing module may be configured to record an endpoint IP address. This information may be obtained, for example, in a communication request such as a SIP Invite message. Other examples of where this information may be extracted from include, but need not be limited to the X-Header or OTG parameter on FROM messages. According to some embodiments, the communications network processing system may be configured to record the endpoint IP address in the billing records. According to various embodiments, this information may be recorded as a fully qualified domain name (FQDN) or actual IP address.

In accordance with various embodiments, a single pipe or port exists through the interface module per processing server for all endpoints. One advantage of this approach is that the processing server does not need to use an interface module address to derive endpoint information.

In some embodiments, the accessing modules protect themselves and the communication network from denial of service (DoS) attacks, malformed SIP messages, null UDP packets, Bye floods, and/or the like by using an access control list (ACL) of acceptable endpoint IP addresses from which communications may be received. An ACL, for example, may include entire subnets and ranges of IP addresses which would be authorized to access the communications network. The ACL may be stored locally at each accessing module and updated on a predetermined schedule. In other embodiments, the ACL may be stored in centralized database which is communicably coupled to each accessing module. In other embodiments, an ACL may be associated with the interface modules logically positioned behind the accessing modules.

The accessing modules, in some embodiments, are semi-stateful. For example, the accessing module monitors the communication session and waits for a first positive response to an Invite request before transitioning to a stateless protocol. Some embodiments are configured, on Invite timeout, to advance the current route to another processing server/interface module pair. In one or more embodiments, the accessing modules may be configured to use the "Via" and "Route" headers to determine where to route the messages. In other cases, a country code, NPA, and/or the like, may be used to determine where to route the message. In the case that the information contained within the headers is not recognizable, a default route may be used. One advantage of using the accessing modules to interface the network is that this prevents having to provision each origination endpoint on the interface module. Another advantage of using the accessing modules is that it limits the number of endpoints which receive "from" and "send" messages.

One of the advantages of the systems and methods described in the embodiments presented below is that much of the intelligence and burden of the routing is shifted from the originating communicator (e.g., the terminal adapter, or customer server) to one or more accessing modules (e.g., load balancers). In addition, the accessing modules provide a logical single interface which allows for a common interface into the communications network. This logical single interface simplifies the task of a the communicator wishing to gain access to the network. In addition, various embodiments provide the ability for the accessing modules to protect the network from attacks and unauthorized access.

In addition, various embodiments allow for an even greater distribution of the communication flow routing by incorporating both internal and external accessing modules. According to some embodiments, the internal accessing modules may perform a variety of functionalities including, but not limited to, load balancing and dropping out of the communication session after setup. Internal accessing modules may also provide route advance capabilities, provide security features, may be stateless, semi-stateless, and/or RFC 3261 compliant. Internal accessing modules may use a domain name server (DNS) to determine a route for the communication session, provide for a cache DNS resolution, provide for fully qualified domain name (FQDN) support, and/or the like. Multiple internal and external accessing modules may be used in accordance with various embodiments of the present invention. In some cases, the multiple devices may use an OSPF shared IP address. While this may not be recommended for geographically separate accessing modules, it does provide for easy scaling for co-located accessing modules. In various embodiments, the accessing modules may use a configurable hashing key with inputs such a s country code, NPA, screen names, and/or the like to determine a prioritized list of routing devices. In a packet based environment, for example, some or all of this information may be obtained from a "FROM" field in the message headers. Once a prioritized list is located, at least in some embodiments, the calls may be routed based on one or more of the following schemes: Round Robin, Priority, Percent Allocation. Some embodiments provide for default routes when no match is found for the result of the hash key.

In the following description, for the purposes of explanation, numerous specific details are set forth in order to provide a thorough understanding of embodiments of the present invention. For example, endpoint registration may be related to some aspects of some embodiments of the invention. For further explanation of endpoint registration, the reader is directed to US Patent Application No. 11/027,564, entitled "Registration Redirect Server". It will be apparent, however, to one skilled in the art that embodiments of the present invention may be practiced without some of these specific details.

Embodiments of the present invention may be provided as a computer program product which may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), and magneto-optical disks, ROMs, random access memories (RAMs), erasable programmable read-only memories (EPROMs), electrically erasable programmable read-only memories (EEPROMs), magnetic or optical cards, flash memory, or other types of media / machine-readable medium suitable for storing electronic instructions. Moreover, embodiments of the present invention may also be downloaded as a computer program product, wherein the program may be transferred from a remote computer to a requesting computer by way of data signals embodied in a carrier wave or other propagation medium via a communication link (e.g., a modem or network connection).

While, for convenience, embodiments of the present invention are described with reference to a packet based communication networks, embodiments of the present invention are equally applicable to various other types of packet based systems and other types of communication networks. For the sake of illustration, various embodiments of the present invention have herein been described in the context of computer programs, physical components, and logical interactions within modern computer networks. Importantly, while these embodiments describe various aspects of the invention in relation to modem computer networks and programs, the method and apparatus described herein are equally applicable to other systems, devices, and networks as one skilled in the art will appreciate. As such, the illustrated applications of the embodiments of the present invention are not meant to be limiting, but instead exemplary. Other systems, devices, and networks to which embodiments of the present invention are applicable include, but are not limited to, other types communication and computer devices and systems. More specifically, embodiments are applicable to communication systems, services, and devices such as cell phone networks and compatible devices. In addition, embodiments are applicable to all levels of communication networks from a private enterprise network to world-wide communication systems and networks.

### Terminology

Brief definitions of terms, abbreviations, and phrases used throughout this application are given below.

The terms "connected" or "coupled" and related terms are used in an operational sense and are not necessarily limited to a direct physical connection or coupling. Thus, for example, two devices may be couple directly, or via one or more intermediary media or devices. As another example, devices may be coupled in such a way that information can be passed therebetween, while not sharing any physical connection on with another. Based on the disclosure provided herein, one of ordinary skill in the art will appreciate a variety of ways in which connection or coupling exists in accordance with the aforementioned definition.

The phrases "in one embodiment," "according to one embodiment," and the like generally mean the particular feature, structure, or characteristic following the phrase is included in at least one embodiment of the present invention, and may be included in more than one embodiment of the present invention. Importantly, such phrases do not necessarily refer to the same embodiment.

If the specification states a component or feature "may", "can", "could", or "might" be included or have a characteristic, that particular component or feature is not required to be included or have the characteristic.

The term "responsive" includes completely or partially responsive.

The term "endpoint" can be a logical location on a communication network such that communications ongoing in relation to the logical location can be targeted, a physical location such that communications emerging from the geographic location are targeted, and/or an individual or entity such that communications associated with the individual or entity are targeted. In other cases, an endpoint may include mobile endpoints which are able to move from a first geographic location to a second geographic location. Examples of mobile endpoints include, but are not limited to, cellular telephones, VoIP phones, satellite phones, and the like.

A "communicator" is used in its broadest sense to include endpoints and/or communication devices. Thus, a communicator can be an entity or individual associated with communications, and/or a communication device capable of receiving and/or sending such transmissions. In some cases, transmissions can be real time transmissions including, but not limited to, video, audio, chat rooms, instant messaging, combinations of the aforementioned, and/or the like.

The phrase "communication network" or the term "network" generally refer to a group of interconnected devices capable of exchanging information. A communication network may be as few as several personal computers on a Local Area Network (LAN) or as large as the Internet, a worldwide network of computers. As used herein "communication network" is intended to encompass any network capable of transmitting information from one entity to another. In one particular case, a communication network is a Voice over Internet Protocol (VoIP) network. In some cases, a communication network may be comprised of multiple networks, even multiple heterogeneous networks, such as one or more border networks, voice networks, broadband networks, service provider networks, Internet Service Provider (ISP) networks, and/or Public Switched Telephone Networks (PSTNs), interconnected via gateways operable to facilitate communications between and among the various networks.

The term "accessing modules" generally refers to a network communications device logically position between, and communicably coupled to, two or more networks. In some embodiments, the accessing module allows endpoints associated with a first network to make indirect network connections to other additional networks and network services. In some embodiments, the accessing module may alter a request from an endpoint or a response from the second network for a variety of purposes.

The term "interface module" generally refers to a communications device logically positioned in a network path between an origination endpoint and a destination endpoint. In some embodiments, an interface module acts as a proxy for a communication session between two endpoints. In this case, the interface module "acts" as if it was the destination endpoint and initiates a second communications session to the destination endpoint. An interface module may be embodied in a session border controller. For example, a session border controller may be used along with a one or more firewalls to enable communication sessions into and out of a first enterprise network. Public communications networks may use a session border controller to allow the use of proprietary protocols from a private enterprise network with internet connections using network address translation (NAT). In other cases, an interface module may include an IP Media Gateway Controller and IP Media Gateway.

In some embodiments, an interface module may be configured to communicably couple to endpoints using different signaling protocols. Examples of signaling protocols include, but need not be limited to, SIP, H.323, MiNET, CorNet-IP, IAX, Skype, Jajah, Megaco (H.248) and MGCP, and the like. In other embodiments, an interface module may be configured to transcode media streams when different codecs, such as G.711, G.729, MPEG-1, MPEG-2, Sorenson 3, DivX, H.261, H.262, H.263, and MPEG-4 for example, are in use. Further still, some embodiments of an interface module provide for firewall features for VoIP traffic. Examples of possible firewall features include, but need not be limited to, denial of service protection, call filtering, bandwidth management, and the like. In addition, in some embodiments, an interface module may provide communication session media, such as RTP, and signaling such as SIP.

The term "processing server" generally refers to a communications device logically positioned between two communication networks. The processing server facilitates communication across the two communication networks and provide features such as security, authentication, filtering, packet accounting, address translation, protocol translation, handshaking, and the like. For example, in some cases a processing server may be an IP MGC or an IP media gateway. In addition, a processing server may be configured to determine how incoming calls should be routed within a network. For example, when messages are routed to other subnetworks via a processing server located at the edges of those subnetworks. For instance, there might be a subnet for each of the different geographic locations (e.g., LA, Denver, Dallas,...), and each geographic region has at least one processing server for ingress/egress to that subnet.

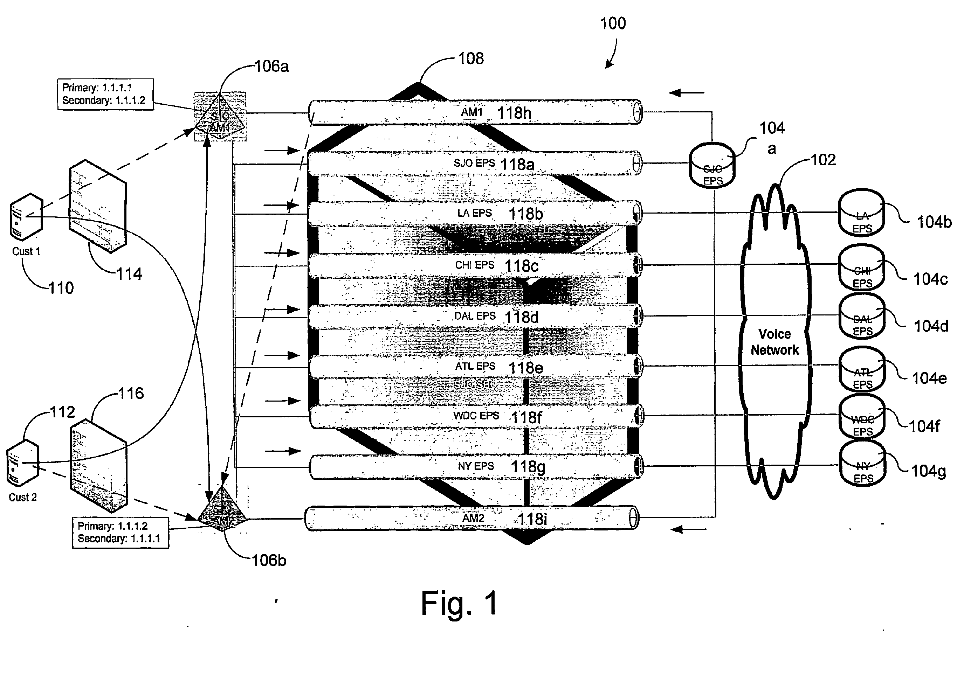

Fig. 1 illustrates an operating environment 100 in which methods and systems may be implemented in accordance with embodiments of the present invention. The environment includes a voice network 102. In a particular embodiment, the voice network 102 is a voice over IP (VOIP) network over which SIP signaling protocol is carried out.

Systems and devices, such as processing servers 104a-g, access servers 106a-b, and interface module 108, carry out functions that, among other things, setup communication sessions over the voice network 102. Processing servers 104a-g may be implemented as, for example, but without limitation, IP media gateway controllers (IP MGCs). Access servers 106a-b may be implemented as, for example, and without limitation, IP MGCs or load balancers. Interface module 108 may be implemented as, for example, and without limitation, one or more session border controllers (SBC) or IP media gateways. Processing servers 104a-g, access servers 106a-b, and interface modules 108a-g are in communication with the voice network 102 and are typically considered to be part of the voice network 102.

With reference to the interface module 108, ports 118a-i are available for routing signaling information for establishing communication sessions. In the exemplary embodiment of Fig. 1, there is a port 118 associated with each processing server 104. For example, port 118a corresponds to processing server 104a. Port 118h corresponds to access module 106a, and port 118i corresponds to access module 106b.

For purposes of illustration, in the embodiment of Fig. 1 a session initiation protocol (SIP) is used to setup communication sessions. According to various embodiments, a communication session may originate from an endpoint or communicator located inside the communications network or outside the communications network. For example, communication sessions can originate from customer server 110 or customer server 112. To setup a communication session, the endpoint transmits a request message, requesting a destination endpoint to enter into the communication session. In the case of SIP signaling, a SIP Invite message is transmitted to request that another endpoint enter the communication session. Examples of communications sessions are video, audio, chat rooms, instant messaging, text messaging, e-mail, combinations of the aforementioned, and/or the like.

When Invite messages are sent from customer server 110, they can go through access module 106a or accessing module 106b. Similarly, Invite messages sent from customer server 112 can go through either 106a or accessing module 106b.

According to some embodiments, accessing modules 106a and 106b act as a logical single interface point to the voice network 102. For example, according to various embodiments, accessing module 106a and accessing module 106b may share an IP address using open shortest path first (OSPF) algorithm. OSPF is a link-state routing algorithm that is used to calculate routes based on the number of routers, transmission speed, delay, route costs, and/or the like. In the embodiment depicted, one access module is primary for one address and secondary for the other address by using OSPF cost routing. Communicators can reach the communications network through either accessing module depending on how the communications session or request is routed. Other embodiments allow for each accessing module to broadcast an anycast address. Anycast and OSPF routing are two exemplary ways in which the accessing modules 106a and 106b may act as a single logical interface to the voice network 102. However, other algorithms and protocols will be apparent to those skilled in the art and are within the scope of the present invention.

In the embodiment depicted in Fig. 1, customer server 110 and customer server 112 are located behind firewalls 114 and 116, respectively. Using OSPF, as illustrated in Fig. 1, when a communicator, such as customer server 110, attempts to establish a communication session with a destination endpoint located within the voice network 102, the communication may be routed to accessing module 106a which is acting as the primary interface point. However, the OSPF algorithm may route the communication session to accessing module 106b.

According to various embodiments, the accessing module to which the communications are routed may be configured to select a port 118a-i of the interface module 108 and a processing server 104 to be used in establishing the communication session. In some embodiments a processing server is selected by the accessing module 106 based on a configurable hash key. For example, the accessing module 106 may select a processing server 104a-g, and associated port 118a-g, based on the Numbering Plan Area (NPA) of the originating communicator. The accessing module 106 may use other hash keys such as, but not limited to, country codes, NPA, screen names, and/or the like.

In other embodiments, the accessing module 106 determines a prioritized list of processing servers 104a-g and associated ports 118a-g. The accessing module 106 then attempts to direct a request to initiate a communications session, through a determined port 118 to the associated processing server 104 based on the NPA of the communicator originating the communications session. If the attempt is unsuccessful, the accessing module 106 may then move to the processing server 104 and port 118 with the next highest priority until the prioritized list is exhausted. In accordance with one embodiment, accessing module 106 may send a SIP Redirected message back to the originating communicator with a list of IP MGC choices. In this case, the originating communicator would try the next choice in the list that the load balancing server returned.

According to some embodiments, each processing server, 104a-g, is associated with a geographic region. In Fig. 1, processing servers 104a-g are associated with San Jose, LA, Chicago, Dallas, Atlanta, Washington DC, and New York, respectively. These processing servers 104 may be configured to determine an IP address of a communicator (e.g., customer server 110 or customer server 112) for a desired communication session and route the communication session through the interface module 108 to any accessing module 106 with a Request-URI of the true destination to notify the accessing module 106 where to send the call.

Typically, ports 118 of the interface module 108 are numbered. According to some embodiments, the port number assigned to a specific processing server 104 is the same for all interface modules 108. For example, port 2 on interface modules at all geographic locations may be associated with the San Jose processing server 104a. Other port association schemes may be utilized in accordance with embodiments of the present invention.

Another advantage of using the accessing modules 106 as a single logical interface to the communications network is that the accessing modules 106 communicably couple the communicators 110, 112 to the ports 118. As such, there is no need to provision each communicator 110, 112 on the interface module 108. In addition, the route determination and connecting logic does not need to be implemented in the communicator 110, 112, but can be implemented at the accessing module 106. Various exemplary embodiments of possible routing performed by accessing modules are described in more detail below.

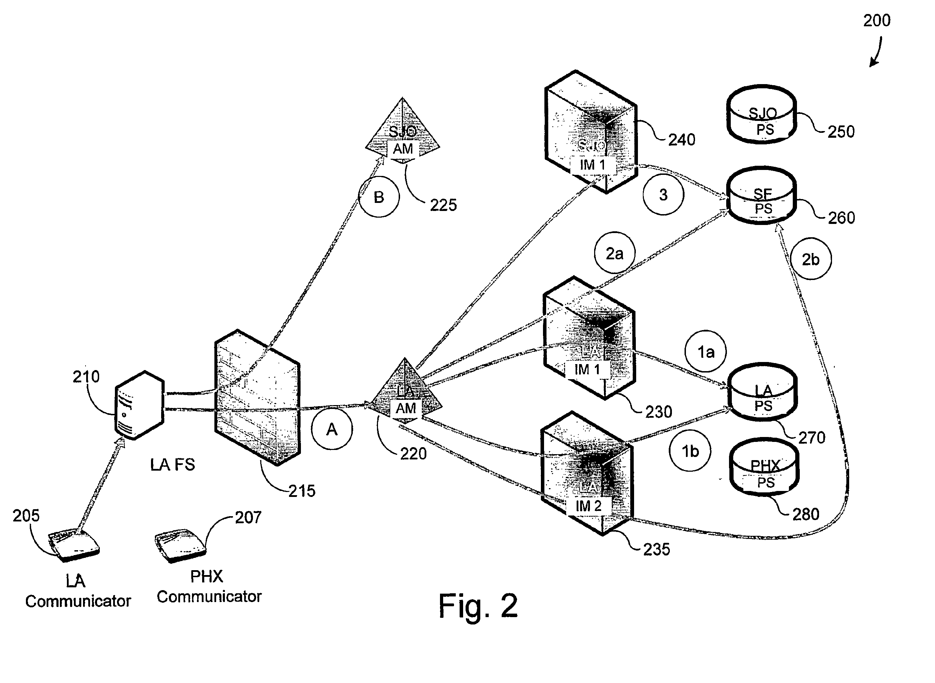

Fig. 2 illustrates an exemplary communications session setup communication flow from an origination endpoint, or communicator, outside the communication network through a network environment, such as that described in Fig. 1. The illustrated communications flow begins with communicator 205 initiating a request to establish a communications session. Communicators are typically associated with a home or primary geographic location, which is generally semi-static, meaning that the home location does not change when the communicator 205 changes location. The home or primary location is typically selected by the user based on where the user expects to most often use the communicator 205. For example, a user in Los Angeles (LA) may purchase a VOIP phone that is assigned a numbering plan area (NPA), or IP address associated with LA.

Of course, communicator 205 may be a mobile endpoint such as a mobile telephone or VoIP phone, and the user may visit or move to another geographic region that is different from the communicator's 205 home region. Thus, the current location of a mobile communicator 205 is dynamic. When the user leaves the home region, this is often referred to as roaming. As such, the mobile endpoint 205 may be associated or registered in a semi-static home (also referred to as "base" or "primary") geographic region, but the communicator may travel (e.g., roam) to another secondary geographic location.

In the exemplary scenario depicted in Fig. 2, communicator 205 is located in the LA geographic region. In this scenario, LA also happens to be communicator's 205 "home" geographic region. Because communicator 205 is located in the LA geographic region, generally, any communications request generated by the communicator are sent to an LA feature server 210. For example, a SIP Invite message may be transmitted from the communicator 205 when the user wants to make a call. When the feature server 210 receives the communication request, the request may then be forwarded through firewall 215 to one of LA accessing module 220 or accessing module 225.

According to various embodiments, the customer feature server 210 server may have route advance capability or use DNS to resolve to one of the accessing modules 220 and 225. In some embodiments, each of the accessing modules 215, 220 may share an OSPF IP address. In some cases, a communicator, such as feature server 210, will choose to route the communications session to the OSPF closest accessing module. In the embodiment depicted, a communication session would only be routed to the SJO accessing module 225 when LA accessing module 220 is unreachable.

According to various embodiments, LA accessing module 220 may be configured to determine the originating endpoint by using information contained within a "FROM" header of a SIP INVITE message. The primary or home NPA, for example, specified by this information may be used to locate a prioritized list of port/processing server pairs. According to one embodiment, the prioritized list specifies as the highest priority the processing server associated with the NPA of the communicator 205. For example, a communication request or session initiated from LA-based communicator 205 will be first routed to LA processing server 270. A communication request from communicator 207, which is based in Phoenix but is presently located near LA, will be first routed to Phoenix processing server 280 despite being currently located near LA.

In one embodiment, a list of port/processing server pairs may be stored on a central database that is accessible by each of the accessing modules. In other embodiments, the list may be stored locally within a database associated with each of the accessing modules. In this case, the list may be updated on a predetermined schedule such as a periodic schedule or the like. Alternatively, the list may be updated by an administrator when ports, processing servers and/or the like are added or removed.

Once the list is retrieved, the accessing module may perform a round-robin approach attempting to route the communication session or request. In the exemplary embodiment illustrated in Fig. 2, the highest priority route is LA interface module 230 to LA processing server 270. Accessing module 220 will attempt to route the communication request or session through this route first. If for some reason the connection is unsuccessful, the next highest priority route will be attempted. As shown in Fig. 2, the call may be routed through a secondary LA interface module 235 to LA processing server 270. According to some embodiments both of these pairs are attempted before going to the next priority processing server. For example, San Francisco processing server 260 may be a backup processing server for LA NPA communication sessions. The prioritized list of interface module/processing server pairs may have LA interface module 230 to San Francisco processing server 260 as the next highest priority, followed by backup LA interface module 235 to San Francisco processing server 260. Next on this exemplary list, may be SJO IP MGC as backup for LA NPA.

According to some embodiments, health status information of the interface modules/ports and the processing servers may be transmitted to the accessing modules. For example, suppose that LA interface module 230 or backup LA interface module 235 are reporting a health status of OK, but LA processing server is reporting a status of down or busy. Then, the accessing module may skip entries on the prioritized list of interface module/processing server pairs in order to expedite the call processing. For example, since LA processing server 270 is reporting down or busy, then accessing module may skip directly to the next highest entry which is not using LA processing server 270. San Jose SBC to San Jose IP MGC

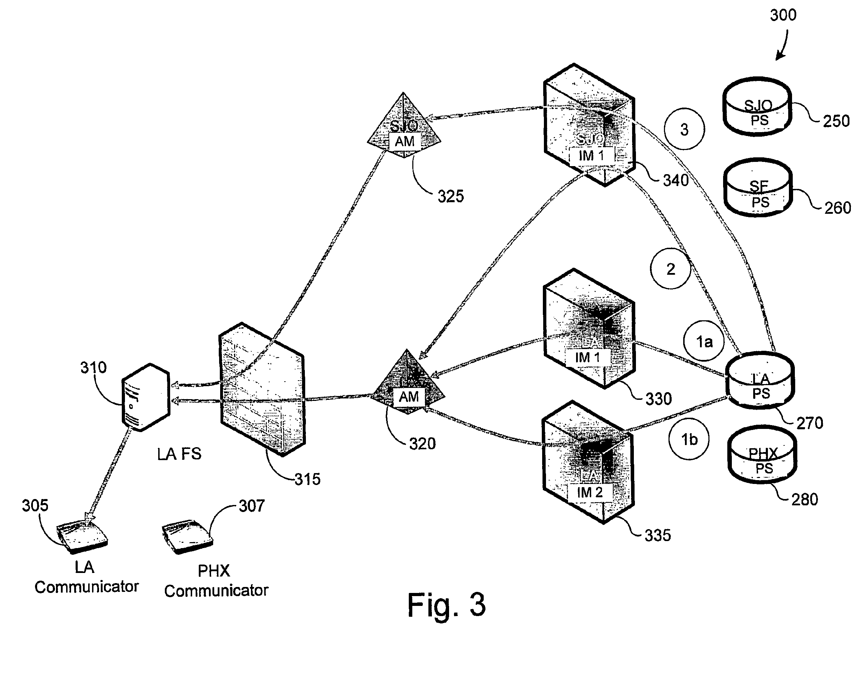

Fig. 3 illustrates an exemplary outgoing communication session setup call flow through the communication network described in Fig. 1. In the illustrated embodiment, LA processing server uses the information associated with destination endpoint, which is communicator 305 in the example shown, to locate a prioritized list of interface module/processing module pairs to try. The processing server may attempt a round-robin style to successfully connect the communication session or request. The processing server may use information within the communication session or request, such as SIP header, NPA of the destination endpoint, and/or the like, to determine the destination. In the example illustrated, assuming for illustration that the LA geographic region is the destination call region, the Table 1 may be a possible prioritized list of routing possibilities.

**Table 1: Exemplary Prioritized List of IM/LB Pairs**

| Priority | Interface Module | Load Balancer |
|---|---|---|
| 1 | LA Primary IM | LA LB |
| 2 | LA Secondary IM | LA LB |
| 3 | SJO IM | LA LB |
| 4 | LA Primary IM | SJO LB |
| 5 | SJO IM | SJO LB |

According to some embodiments, any accessing module is capable of communicating with any endpoint or communicator. So, for example, if the health status of primary LA interface module is "OK," but LA load balancer is down or busy, the communication session may be routed through the San Jose accessing module. For that matter, the call may even be successfully routed through the San Jose interface module and the San Jose accessing module. Once the communication session reaches an accessing module, the accessing module may use route header data, such as data found in a SIP Invite message, for example, to determine which communicator the session or request should be routed to. In some embodiments, no communicator-specific routing is required on the accessing module.

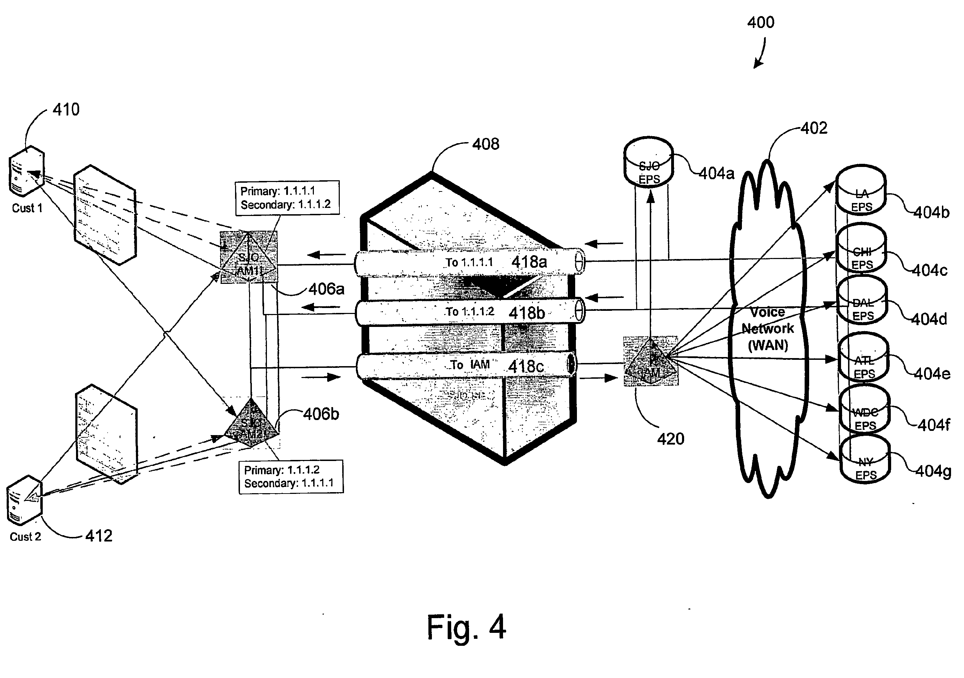

Fig. 4 illustrates an exemplary system diagram which may be used in accordance with some embodiments of the present invention. In the embodiment depicted, there are two types of accessing modules: external accessing modules and internal accessing modules. The external accessing modules provide a single logical interface for communicators desiring to access the communications network 402. Communicators, such as communicator 410 and communicator 412, may reach the communications network through either external accessing module 406a or external accessing module 406b. For example, according to various embodiments, accessing module 406a and accessing module 406b may share an IP address using open shortest path first (OSPF) algorithm. OSPF is a link-state routing algorithm that is used to calculate routes based on the number of routers, transmission speed, delay, route costs, and/or the like. In the embodiment depicted, one is primary for one address and secondary for other address by using OSPF cost routing. Communicators can reach the communications network through either accessing module depending on how the communications session or request is routed. Other embodiments allow for each accessing module to broadcast an anycast address. These are two exemplary ways in which the accessing modules 406a and 406b may act as a single logical interface to the communication network. However, other algorithms and protocols will be apparent to those skilled in the art and are within the scope of the present invention.

According to various embodiments, external accessing modules 406a and 406b may be configured to protect themselves and the communication network from denial of service (DoS) attacks, malformed SIP messages, null UDP packets, Bye floods, and/or the like by using an access control list (ACL) of acceptable endpoint IP addresses from which communications may be received. An ACL, for example, may include entire subnets and ranges of IP addresses which would be authorized to access the communications network. The ACL may be stored locally at each accessing module and updated on a predetermined schedule. In other embodiments, the ACL may be stored in centralized database which is communicably coupled to each accessing module. In other embodiments, an ACL may be associated with the interface modules communicably coupled to the external accessing modules.

In the system illustrated in Fig. 4, the interface module 408 is configured to have at least three ports 418a-418c, one for the primary and secondary addresses of the accessing modules and one for communicably coupling the external accessing modules to the internal accessing module 420. This type of structure eliminates the need for the interface module to be able to provision each communicator directly. According to various embodiments, if a communication session originates from outside the communications network, external accessing modules 406a and 406b may be configured to direct the communications session through interface module 408 to internal accessing module 420. While not shown in Fig. 4, various embodiments of the present invention allow for multiple interface modules and multiple internal load balancers.

Once a communication session or request reaches internal accessing module 420, at least according to various embodiments, internal accessing module 420 may use a configurable hash key applied to information contained within the communication session or request to determine how to route the communication session. For example, internal accessing module 420 may select a processing server based on the NPA of the originating communicator. The accessing module may use other hash keys such as, but not limited to, country codes, screen names, and/or the like.

In other embodiments, the accessing module determines a prioritized list of processing servers. The internal accessing module 420 may then attempt to direct the communications session, or request to initiate a communications session, through a determined processing server based on the NPA of the communicator originating the communications session. If the attempt is unsuccessful, the accessing module may then move to the processing server with the next highest priority until the prioritized list is exhausted. According to some embodiments, once the communication session or request reaches the processing server, the processing server is configured to determine how to route the call to the destination communicator. For example, in a packet-based communication session, the processing server may determine the IP address and routes through which the communications should be routed.

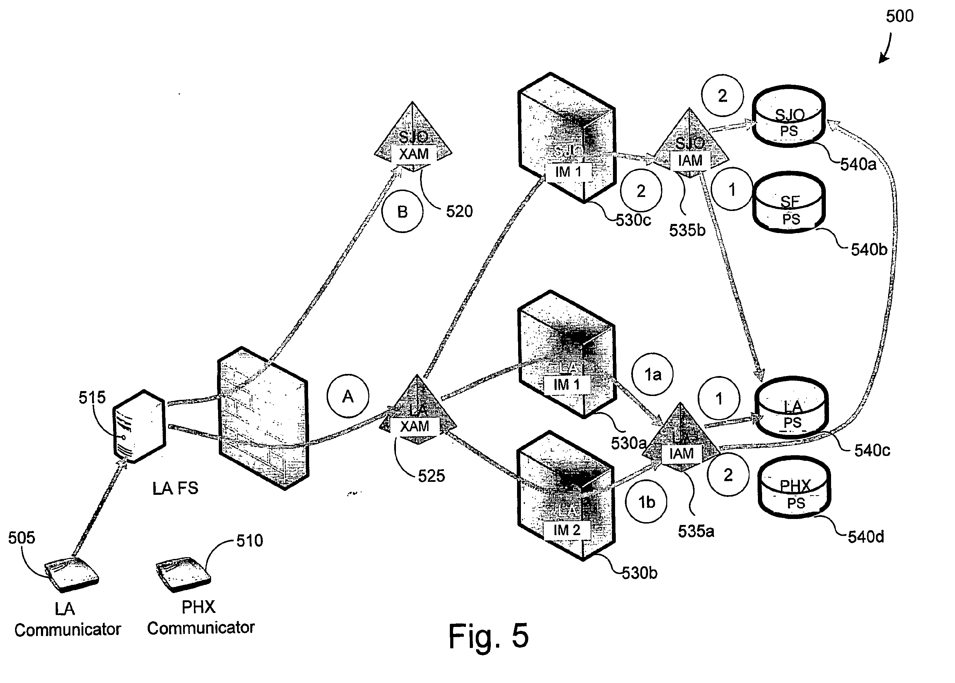

Fig. 5 illustrates another exemplary incoming communication session call flow through a communication network similar to the one described in Fig. 4. As illustrated in Fig. 5, LA communicator 505 sends a SIP Invite to LA feature server 515. In other embodiments, the communications request may be based on other protocols known to those skilled in the art. In addition, according to various embodiments, communicators may be mobile endpoints. In these cases, the endpoints are associated or registered with a first geographic location. However, the endpoints may roam, or relocate, to a second geographic location. For example, communicator 510 is associated with (i.e., based in) Phoenix, but is currently located in the geographic area associated with LA.

LA communicator 505 attempts to initiate a communication session by sending a request to LA feature server 515. According to some embodiments, the communication session may be a packet based method. As such, once the request is processed by LA feature server 515, a SIP Invite message, for example, may be sent to LA accessing module 525. As previously described, the communications network may consist of multiple accessing modules. Various protocols known to those skilled in the art may be used to route the communication session or request to the appropriate accessing module. In various embodiments, the feature server may be configured to provide route advance capabilities and/or use a domain name server (DNS) to resolve the address of the desired internal accessing modules. According to one or more embodiments, the internal accessing modules could share an OSPF IP address. As such, a communicating server may be routed to the closest internal accessing module. For example, a communication session or request may only go to SJO internal accessing module when LA internal accessing module was unreachable or too busy to process the request. In some embodiments, the external and internal accessing modules may be configured to provide varying degrees of load balancing across the destination processing servers and internal load balancers. This load balancing may be based, at least in part, on one or more system metrics and/or status reports.

According to one or more embodiments as depicted in Fig. 5, LA external accessing module receives a communication session, or communication request, from an origination communicator. In some embodiments, the external accessing module may use, at least in part, information contained within the communication request, or session, to locate or determine a prioritized list of processing servers to attempt to route the communication request through. For example, if the communication request is using a SIP protocol, information within the FROM header may be accessed. Using this information the external accessing module may determine the NPA associated with the originating communicator and then, based at least in part on this information, locate or determine a prioritized list of SBCs to try.

For example, if LA communicator 505, which is currently located in the LA geographic area, was the originating communicator, the prioritized list may include LA interface module to LA internal accessing module and LA secondary interface module to LA internal accessing module as the top two routes. Additional routes may be returned in the prioritized list which would be attempted if these routes failed for any reason. According to one or more embodiments, once the communication session or request is routed to an internal accessing module, the internal accessing module may then determine which processing server the communication session or request may be routed through. For example, LA or SJO internal accessing module may get the destination communicator number out of a FROM header. According to some embodiments, the internal accessing module may then use this information, at least in part, to locate a prioritized list of processing servers through which the communication session or request may be routed. According to some embodiments, the internal accessing modules may use a configurable hash key along with information such as NPA, screen name, country code, and/or the like to determine a prioritized list.

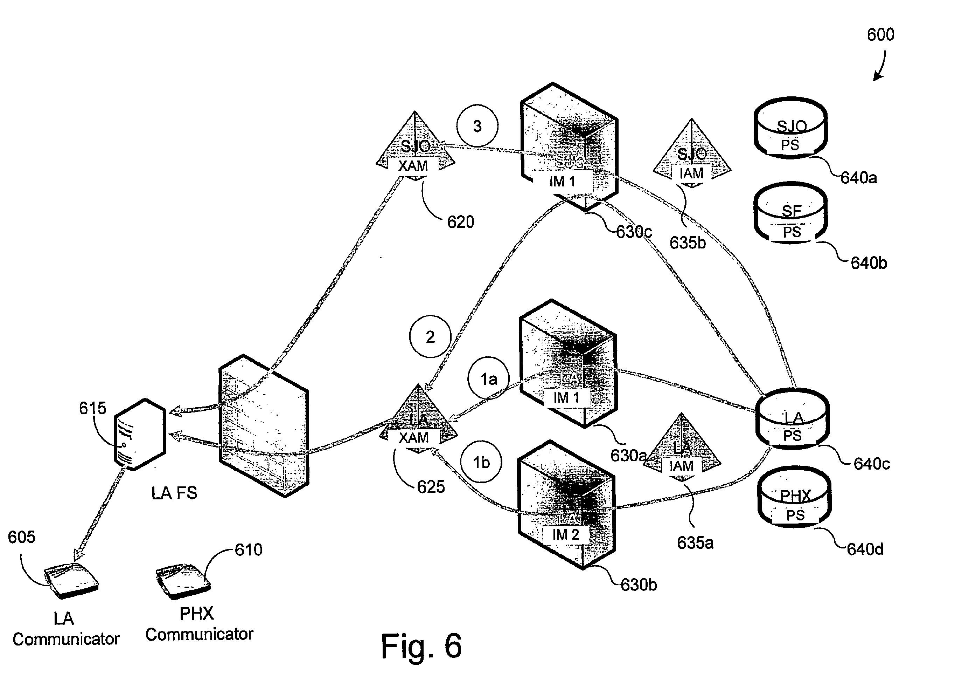

Fig. 6 illustrates an exemplary outgoing communication session call flow through the communication network described in Fig. 4 which may be used in accordance with one or more embodiments of the present invention. In the exemplary call flow depicted, LA processing server receives a communication session, or a communication request. According to some embodiments, the processing servers are configured to determine a prioritized list of interface module/external accessing module pairs, thus bypassing the need for the internal load balancers. In other embodiments, the processing server simply passes the communication session or request on to the internal accessing modules where the determination of how to route the call is made.

The processing servers, according to some embodiments, may use information associated with the origination communicator or destination communicator to locate or determine a prioritized list of interface module/external accessing module pairs through which the communication session or request will be attempted to be routed. According to various embodiments, any external accessing modules can reach any communicator. However, some accessing modules may be preferably based on one or more selection criteria including, but not limited to, cost, load, distance, and/or the like.

As an exemplary illustration, the processing server may locate or determine the exemplary prioritized list of interface module/external accessing module pairs shown below in Table 2:

**Table 2: Exemplary IM/AM Pairs**

| Priority | Interface Module | External Accessing Module |
|---|---|---|
| 1 | LA Primary IM | LA XAM |
| 2 | LA Secondary IM | LA XAM |
| 3 | SJO IM | LA XAM |
| 4 | LA Primary IM | SJO XAM |
| 5 | SJO IM | SJO XAM |

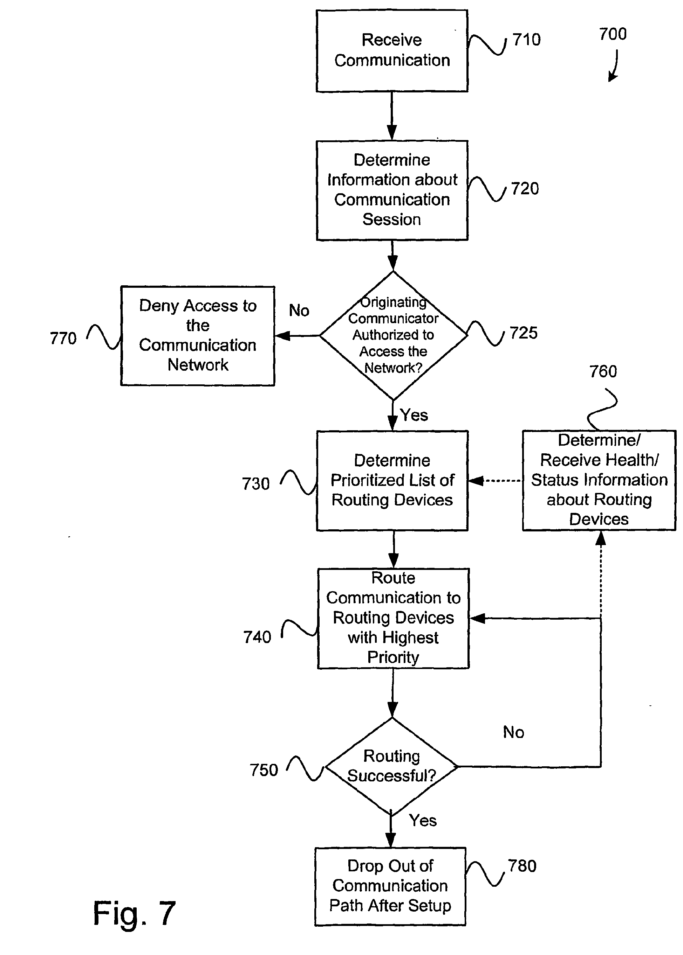

Fig. 7 is an exemplary flow diagram illustrating the functionality of a routing device which may be used in accordance with various embodiments of the present invention. The routing device may be an accessing module, a processing server, and/or the like. According to various embodiments, a receiving operation 710 receives a request to initiate a communication session or a communication session from an originating communicator. The originating communicator may be a mobile endpoint associated with a home geographic location. The communicator, however, may not be currently located in this home geographic location, i.e., the communicator may be located in another geographic location different from the home geographic location.

The originating communicator may be attempting to establish a communication session with a destination communicator. Various information may be associated with this communication session such as the home geographic region of the originating communicator, home geographic region of the destination communicator, the current geographic region in which the originating communicator is located, a screen name, and/or the like. According to the embodiment shown in Fig. 7, a determining operation 720 determines information about the communication session. According to various embodiments, the information may be information associated with the home geographic region of the origination communicator, the home geographic region the destination communicator, and/or the like. This information may be used with a configurable hash key to determine how the call should be routed. In some embodiments, the information may include a NPA, a country code, a screen name, and/or the like. In some embodiments, this information may be retrieved from headers within communication session signaling or from within the setup protocols.

At decision block 725, a determination is made as to whether the originating communicator is authorized to access the network. In some embodiments, this determination may include using an access control list (ACL) of acceptable endpoint IP addresses from which communications may be received from. An ACL, for example, may include entire subnets and ranges of IP addresses which would be authorized to access the communications network. The ACL may be stored locally at each accessing module and updated on a predetermined schedule. In other embodiments, the ACL may be stored in centralized database which is communicably coupled to each accessing module. In other embodiments, an ACL may be associated with the interface modules logically positioned behind the accessing modules.

In one or more embodiments, a security password or code may be required to access the communications network. If a determination is made that the originating communicator is not authorized to access the network, a denial operation 770 will deny access to the communication network. If a determination is made that the originating communicator is authorized to access the network, access may be granted to the communication network.

A determining operation 730 may occur once access is granted to the network. This operation determines, locates, etc. a prioritized list of routing devices. In some embodiments, the prioritized list may be a predetermined list stored and accessed in one or more databases. The predetermined list may be manually generated or automatically generated and updated on a periodic basis, for example. According to some embodiments, the automatically generated list may depend on health and/or status information about routing devices as seen in the determining/receiving operation 760. In other embodiments, the prioritized lists may be automatically generated with each communication that is granted access to the communication network. And, in some embodiments, this generated list may depend on information received from determining/receiving operation 760 about routing devices within the network. For example, a particular routing device such as a processing server, interface module, internal or external accessing module may be down or too busy to accept additional communication sessions. This information may be used in determining a prioritized list of routing devices through which the communication session may be routed.

According to some embodiments, the prioritized list is based on, or selected, using information that was determined about the originating communicator. For example, the highest priority processing server may be chosen based on the home geographic region of the originating communicator even if it is a mobile endpoint currently located in a different geographic location. In some embodiments, the interface module is also chosen based on the home geographic region of the originating communicator even if it is a mobile endpoint currently located in a second geographic location. In other embodiments, the processing server and/or interface modules with the highest priority are chosen based on the home geographic location of the destination communicator.

Once a prioritized list is determined, a routing operation 740 may be performed to route the communication session or request to the destination communicator through the devices with the highest priority. The success of the routing of the communication is monitored. In some embodiments this is done with a state-full system, or a semi-stateful, system device. In some embodiments, if the routing is unsuccessful, information about where the failure occurred may be collected as shown in operation 760. Using this information, a new prioritized list may be determined. For example, if a processing server is down, then a new list may be created eliminating that processing server as a possible routing device. According to various embodiments, the communication session or request may then be routed to the routing devices which have the highest remaining priority. This may be repeated until all routing devices have been attempted or until the communication session is successfully routed. A drop out operation 780 may be performed in accordance with one or more embodiments if the routing was successful.

### Exemplary Computer System Overview

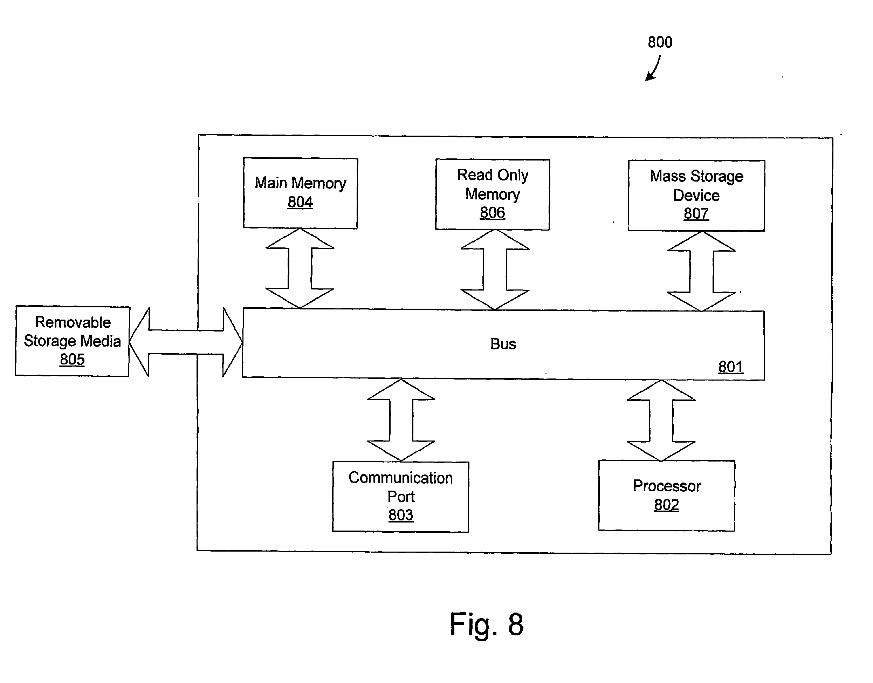

Embodiments of the present invention include various steps, which are described above. A variety of steps described herein may be performed by hardware components or may be embodied in machine-executable instructions, which may be used to cause a general-purpose or special-purpose processor programmed with the instructions to perform the steps. Alternatively, the steps may be performed by a combination of hardware, software, and/or firmware. As such, Fig. 8 is an example of a computer system 800 with which embodiments of the present invention may be utilized. According to the present example, the computer system includes a bus 801, at least one processor 802, at least one communication port 803, a main memory 804, a removable storage media 805 a read only memory 806, and a mass storage 807.

Processor(s) 802 can be any known processor, such as, but not limited to, an Intel® Itanium® or Itanium 2® processor(s), or AMD® Opteron® or Athlon MP® processor(s), or Motorola ® lines of processors. Communication port(s) 803 can be any of an RS-232 port for use with a modem based dialup connection, a 10/100 Ethernet port, or a Gigabit port using copper or fiber. Communication port(s) 803 may be chosen depending on a network such a Local Area Network (LAN), Wide Area Network (WAN), or any network to which the computer system 800 connects.

Main memory 804 can be Random Access Memory (RAM), or any other dynamic storage device(s) commonly known in the art. Read only memory 806 can be any static storage device(s) such as Programmable Read Only Memory (PROM) chips for storing static information such as instructions for processor 802.

Mass storage 807 can be used to store information and instructions. For example, hard disks such as the Adaptec® family of SCSI drives, an optical disc, an array of disks such as RAID, such as the Adaptec family of RAID drives, or any other mass storage devices may be used.

Bus 801 communicatively couples processor(s) 802 with the other memory, storage and communication blocks. Bus 801 can be a PCI /PCI-X or SCSI based system bus depending on the storage devices used.

Removable storage media 805 can be any kind of external hard-drives, floppy drives, IOMEGA® Zip Drives, Compact Disc - Read Only Memory (CD-ROM), Compact Disc - Re-Writable (CD-RW), Digital Video Disk - Read Only Memory (DVD-ROM).

In conclusion, the embodiments described above are meant to exemplify some types of possibilities. In no way should the aforementioned examples limit the scope of the invention, as they are only exemplary embodiments. While detailed descriptions of one or more embodiments of the invention have been given above, various alternatives, modifications, and equivalents will be apparent to those skilled in the art. Therefore, the above description should not be taken as limiting the scope of the invention, which is defined by the appended claims.

## Claims

1. A method for establishing a communications session, the method comprising:
receiving at a load balancer (106a, 106b) a request to establish a communications session between a mobile origination endpoint and a destination endpoint, wherein the request is sent from a communication device server (110, 112) that serves the origination endpoint within a first geographic location;
determining a path in a communications network at the load balancer (106a, 106b) by selecting an IP Media Gateway Controller (IP MGC) (104a - 104g) from a plurality of IP MGCs, wherein selecting the IP MGC (104a - 104g) is based on data in the request that is independent of the first geographic location and
establishing the communications session between the origination endpoint and the destination endpoint through the determined path in the communications network,
wherein the first geographic location is different from a second semi-static location associated with the originating endpoint, wherein said semi-static location is a location that does not change when the originating endpoint changes location,
the method further comprising determining from the request the semi-static location and wherein the selecting the IP MGC (104a - 104g) is based on the semi-static location.

2. The method as recited in claim 1, wherein the determining of the path in the communications network further includes selecting a session border controller communicably coupled to the load balancer (106a, 106b) and the selected IP MGC (104a - 104g).

3. The method as recited in claim 2, further comprising selecting a port of the session border controller.

4. The method as recited in claim 3, wherein selecting the port comprises selecting the port associated with the selected IP MGC (104a - 104g).

5. The method as recited in claim 1, wherein the request to establish a communications session comprises a session initiation protocol (SIP) invite message.

6. The method as recited in claim 1, wherein the data includes a Numbering Plan Area (NPA) identifier associated with the origination endpoint.

7. A computer-readable media having thereon computer executable instructions causing a network load balancer (106a, 106b) to carry out a method for establishing a communication session, the method comprising:
receiving at the load balancer (106a, 106b) a request to establish a communication session;
determining from the request information descriptive of an originator of the communication session;
selecting a processing server based on the determined information descriptive of the originator, without regard to a current location of the originator;
selecting an interface module, the interface module including a plurality of ports (118a - 118i) through which the communication session should be routed;
determining an interface module port (118a - 118i) through which the communication session should be routed, wherein the interface module port (118a - 118i) is associated with the selected communication session processing server (104a - 104g); and
routing the communication session from the load balancer (106a, 106b) to the selected communication session processing server (104a - 104g),
wherein the determined information describes a semi-static location associated with the originator and the semi-static location is different from the current location, wherein said semi-static location is a location that does not change when the originator changes location,
the method further comprising determining from the request the semi-static location and wherein the selecting the processing server is based on the semi-static location.

8. The computer readable media as recited in claim 7, the method further comprising:
determining if the routing of the communication session to the selected communication session processing server (104a - 104g) was successful;
selecting an alternate communication processing server and an alternate interface module (108) if the routing of the communication session was unsuccessful; and
rerouting the communication session from the load balancer (106a, 106b) to the alternate communication processing server (104a - 104g) through the alternate interface module (108).

9. The computer readable media as recited in claim 7, the method further comprising:
issuing a communication session invitation from the load balancer (106a, 106b) to the selected processing server (104a - 104g) via the selected interface module;
waiting for the communication session invitation to time-out;
selecting an alternate communication processing server (104a - 104g) and an alternate interface module (108) if the communication session invitation timed-out; and
rerouting the communication session from the load balancer (106a, 106b) to the alternate communication processing server (104a -104g) through the alternate interface module (108).

10. The computer readable media as recited in claim 9, wherein the rerouting of the communication session is performed at least in part based on information contained in signaling message information associated with the communication invitation.

11. The computer readable media as recited in claim 9, wherein the rerouting of the communication session is performed, at least in part, based on information contained in one or more signaling messages associated with the communication invitation.

12. A communications system comprising:
a plurality of IP Media Gateway Controllers (IP MGCs) (104a - 104g);
an interface module including ports, wherein each port is associated with, and communicably coupled to, one of the plurality of IP MGCs (104a - 104g); and
an accessing module (106a, 106b) configured to receive a communications request from an origination endpoint, wherein the accessing module (106a, 106b) is configured to select one of the plurality of IP MGCs (104a - 104g) based on a parameter associated with the origination endpoint, wherein the parameter is independent of a current geographic location of the origination endpoint,
wherein the parameter comprises a semi-static location associated with the origination endpoint and the current geographic location is different from the semi-static location, wherein said semi-static location is a location that does not change when the origination endpoint changes location,
the system further configured to determine from the communications request the semi-static location and wherein the selecting one of the plurality of IP MGCs is based on the semi-static location.

13. The communications system of claim 12, wherein the accessing module (106a, 106b) is one of a plurality of accessing modules, wherein each of the plurality of accessing modules share an internet protocol (IP) address using Open Shortest Path First (OSPF) protocol.

14. The communications system of claim 12, wherein the accessing module is one of a plurality of accessing modules (106a, 106b), and wherein the system is configured to utilize a domain name server (DNS) to determine which one of the plurality of accessing modules (106a, 106b) the communications request should be routed to.

15. The communications system as recited in claim 12, wherein each of the IP MGCs (104a - 104g) is associated with multiple servers, the system further comprising at least one internal load balancer logically positioned between the interface module and the plurality of IP MGCs (104a - 104g) configured to balance multiple communication requests across the multiple servers associated with the IP MGC (104a - 104g).

16. The communications system as recited in claim 12, wherein the parameter associated with the origination endpoint is a geographic parameter indicating a home geographic location associated with the origination endpoint, and wherein the accessing module is configured to thereby select the IP MGC (104a - 104g) associated with the home geographic location.

17. The communications system as recited in claim 16, wherein the origination endpoint is a mobile endpoint and is configured to send the request from a roaming geographic location different from the first geographic location.

18. The communications system as recited in claim 17, wherein the request is directed at a destination endpoint associated with a third geographic location different from the home geographic location.

19. The communications system of claim 12 wherein the accessing module is operable to iteratively select IP MGCs (104a - 104g) from a list of IP MGCs, without sending the list to the origination endpoint.

20. A communications system as claimed in claim 12 and comprising:
a communications network;
a destination endpoint operable to enter into a communication session over the communications network;
the origination endpoint configured to issue a said communication session request requesting the destination endpoint to enter into a communication session;
the plurality of IP Media Gateway Controllers (IP MGC) (104a - 104g) configured to provide ingress to the communications network;
one or more session border controllers, each session border controller capable of directing the communications session request to a selected one of the IP MGCs (104a - 104g);
an association database configured to store a prioritized list of session border controllers and IP MGC pairs;
a customer database configured to store a list of customers authorized to access the communications network; and
a plurality of load balancers (106a, 106b), wherein each load balancer is a said accessing module and provides a common interface point for the origination endpoint to access the communications network, wherein each load balancer is configured to:
receive the communications session request from the origination endpoint;
access the customer database to determine if the origination endpoint corresponds to a customer who is authorized to access the communications network;
use one or more properties associated with the origination endpoint, other than current location of the origination endpoint, to select one of the plurality of IP MGCs (104a - 104g) through which to route the communication request;
access the association database to determine which of the one or more session border controllers is associated with the selected IP MGC (104a - 104g); and
direct the communications session request through the determined session border controller to the IP MGC (104a - 104g).
wherein the one or more properties comprises a semi-static location associated with the origination endpoint and the current location is different from the semi-static location, wherein said semi-static location is a location that does not change when the origination endpoint changes location,
the system further configured to determine from the communication session request the semi-static location and wherein the selecting the one of the plurality of IP MGCs (104a - 104g) is based on the semi-static location.

21. The communications system of claim 20, wherein each of the plurality of load balancers (106a, 106b) share an IP address using Open Shortest Path First (OSPF) protocol.

22. The communications system of claim 20, wherein each of the one or more session border controllers comprises a plurality of ports, wherein each port is associated with one of the one or more IP MGCs (104a - 104g).

## Patentansprüche

1. Verfahren zum Aufbauen einer Kommunikationssitzung, wobei das Verfahren umfasst:
in einem Lastverteiler (106a, 106b) erfolgendes Empfangen einer Aufforderung, eine Kommunikationssitzung zwischen einem mobilen Absendeendpunkt und einem Bestimmungsendpunkt aufzubauen, worin die Aufforderung von einem Kommunikationsgeräteserver (110, 112) gesendet wird, der als der Absendeendpunkt innerhalb eines ersten geografischen Standorts dient;
im Lastverteiler (106a, 106b) erfolgendes Bestimmen eines Weges in einem Kommunikationsnetzwerk durch Auswählen eines IP-Mediengatewaycontrollers (IP-MGC) (104a-104g) aus einer Vielzahl von IP-MGCs, worin das Auswählen des IP-MGC (104a-104g) auf Daten in der Aufforderung beruht, die unabhängig von dem ersten geografischen Standort sind; und
Aufbauen der Kommunikationssitzung zwischen dem Absendeendpunkt und dem Bestimmungsendpunkt über den bestimmten Weg in dem Kommunikationsnetzwerk,
worin der erste geografische Standort sich von einem zweiten, halbstationären Standort, der dem Absendeendpunkt zugeordnet ist, unterscheidet, worin der halbstationäre Standort ein Standort ist, der sich nicht ändert, wenn der Absendeendpunkt seinen Standort ändert,
wobei das Verfahren ferner das Bestimmen des halbstationären Standorts aus der Aufforderung umfasst und worin das Auswählen des IP-MGC (104a-104g) auf dem halbstationären Standort beruht.

2. Verfahren nach Anspruch 1, worin das Bestimmen des Weges in dem Kommunikationsnetzwerk ferner einschließt: Auswählen eines Sitzungsgrenzcontrollers, der kommunikationsfähig mit dem Lastverteiler (106a, 106b) und dem ausgewählten IP-MGC (104a-104g) gekoppelt ist.

3. Verfahren nach Anspruch 2, ferner umfassend: Auswählen eines Ports des Sitzungsgrenzcontrollers.

4. Verfahren nach Anspruch 3, worin das Auswählen des Ports umfasst: Auswählen des Ports, der dem ausgewählten IP-MGC (104a-104g) zugeordnet ist.

5. Verfahren nach Anspruch 1, worin die Aufforderung, eine Kommunikationssitzung aufzubauen, eine Sitzungseinrichtungsprotokoll-(SIP-)Einladungsnachricht umfasst.

6. Verfahren nach Anspruch 1, worin die Daten eine dem Absendeendpunkt zugeordnete Nummerierungsbereich-(NPA-)Kennung einschließen.

7. Computerlesbares Medium mit computerausführbaren Anweisungen darauf, die einen Netzwerklastverteiler (106a, 106b) veranlassen, ein Verfahren zum Aufbauen einer Kommunikationssitzung auszuführen, wobei das Verfahren umfasst:
im Lastverteiler (106a, 106b) erfolgendes Empfangen einer Aufforderung, eine Kommunikationssitzung aufzubauen;
Bestimmen von Information, die beschreibend für einen Absender der Kommunikationssitzung ist, aus der Aufforderungsinformation,
Auswählen eines Verarbeitungsservers auf der Grundlage der bestimmten Information, die beschreibend für den Absender ist, ungeachtet eines aktuellen Standorts des Absenders;
Auswählen eines Schnittstellenmoduls, wobei das Schnittstellenmodul eine Vielzahl von Ports (118a-118i) aufweist, über welche die Kommunikationssitzung geleitet werden soll;
Bestimmen eines Schnittstellenmodulports (118a-118i), über den die Kommunikationssitzung geleitet werden soll, worin der Schnittstellenmodulport (118a-118i) dem ausgewählten Kommunikationssitzungs-Verarbeitungsserver (104a-104g) zugeordnet ist; und
Leiten der Kommunikationssitzung vom Lastverteiler (106a, 106b) zum ausgewählten Kommunikationssitzungs-Verarbeitungsserver (104a-104g),
worin die bestimmte Information einen halbstationären Standort beschreibt, der dem Absender zugeordnet ist, und der halbstationäre Standort sich vom aktuellen Standort unterscheidet, worin der halbstationäre Standort ein Standort ist, der sich nicht ändert, wenn der Absender seinen Standort ändert,
wobei das Verfahren ferner das Bestimmen des halbstationären Standorts aus der Aufforderung umfasst und worin das Auswählen des Verarbeitungsservers auf dem halbstationären Standort beruht.

8. Computerlesbares Medium nach Anspruch 7, wobei das Verfahren ferner umfasst:
Bestimmen, ob das Leiten der Kommunikationssitzung zum ausgewählten Kommunikationssitzungs-Verarbeitungsserver (104a-104g) erfolgreich war;
Auswählen eines alternativen Kommunikationsverarbeitungsserver und eines alternativen Schnittstellenmoduls (108), wenn das Leiten der Kommunikationssitzung nicht erfolgreich war; und
Umleiten der Kommunikationssitzung vom Lastverteiler (106a, 106b) zum alternativen Kommunikationsverarbeitungsserver (104a-104g) über das alternative Schnittstellenmodul (108).

9. Computerlesbares Medium nach Anspruch 7, wobei das Verfahren ferner umfasst:
Ausgeben einer Kommunikationssitzungseinladung vom Lastverteiler (106a, 106b) an den ausgewählten Verarbeitungsserver (104a-104g) über das ausgewählte Schnittstellenmodul;
Warten auf eine Zeitüberschreitung der Kommunikationssitzungseinladung;
Auswählen eines alternativen Kommunikationsverarbeitungsservers (104a-104g) und eines alternativen Schnittstellenmoduls (108), wenn eine Zeitüberschreitung der Kommunikationssitzungseinladung auftritt; und
Umleiten der Kommunikationssitzung vom Lastverteiler (106a, 106b) zum alternativen Kommunikationsverarbeitungsserver (104a-104g) über das alternative Schnittstellenmodul (108).

10. Computerlesbares Medium nach Anspruch 9, worin das Umleiten der Kommunikationssitzung mindestens teilweise auf der Grundlage von Information durchgeführt wird, die in Signalisierungsnachrichteninformation enthalten ist, die der Kommunikationseinladung zugeordnet ist.

11. Computerlesbares Medium nach Anspruch 9, worin das Umleiten der Kommunikationssitzung mindestens teilweise auf der Grundlage von Information durchgeführt wird, die in einer oder mehreren Signalisierungsnachrichten enthalten ist, die der Kommunikationseinladung zugeordnet sind.

12. Kommunikationssystem, umfassend:
eine Vielzahl von IP-Mediengatewaycontrollern (IP-MGCs) (104a-104g);
ein Schnittstellenmodul, das Ports aufweist, wobei jeder Port einem aus der Vielzahl von IP-MGCs (104a-104g) zugeordnet und mit ihm kommunikationsfähig verbunden ist; und
ein Zugangsmodul (106a, 106b), das dafür konfiguriert ist, eine Kommunikationsaufforderung von einem Absendeendpunkt zu empfangen, worin das Zugangsmodul (106a, 106b) dafür konfiguriert ist, auf der Grundlage eines Parameters, der dem Absendeendpunkt zugeordnet ist, einen aus der Vielzahl von IP-MGCs (104a-104g) auszuwählen, worin der Parameter unabhängig von einem aktuellen geografischen Standort des Absendeendpunkts ist;
worin der Parameter einen halbstationären Standort umfasst, der dem Absendeendpunkt zugeordnet ist, und der aktuelle Standort sich vom halbstationären Standort unterscheidet, worin der halbstationäre Standort ein Standort ist, der sich nicht ändert, wenn der Absendeendpunkt seinen Standort ändert,
wobei das System ferner dafür konfiguriert ist, aus der Kommunikationsaufforderung den halbstationären Standort zu bestimmen, und worin das Auswählen von einem aus der Vielzahl von IP-MGCs auf dem halbstationären Standort beruht.

13. Kommunikationssystem nach Anspruch 12, worin das Zugangsmodul (106a, 106b) eines aus einer Vielzahl von Zugangsmodulen ist, worin jedes aus der Vielzahl von Zugangsmodulen unter Verwendung des Protokolls "Open Shortest Path First" (OSPF) eine Internetprotokoll-(IP-)Adresse gemeinsam nutzt.

14. Kommunikationssystem nach Anspruch 12, worin das Zugangsmodul eines aus einer Vielzahl von Zugangsmodulen (106a, 106b) ist und worin das System dafür konfiguriert ist, einen Domainnamenserver (DNS) zu nutzen, um zu bestimmen, zu welchem aus der Vielzahl von Zugangsmodulen (106a, 106b) die Kommunikationsaufforderung geleitet werden soll.

15. Kommunikationssystem nach Anspruch 12, worin jedem der IP-MGCs (104a-104g) mehrere Server zugeordnet sind, wobei das System ferner mindestens einen internen Lastverteiler umfasst, der logisch zwischen dem Schnittstellenmodul und der Vielzahl von IP-MGCs (104a-104g) angeordnet und dafür konfiguriert ist, mehrere Kommunikationsaufforderungen auf die mehreren dem IP-MGC (104a-104g) zugeordneten Server zu verteilen.

16. Kommunikationssystem nach Anspruch 12, worin der Absendeendpunkt zugeordnete Parameter ein geografischer Parameter ist, der einen geografischen Heimatstandort angibt, der dem Absendeendpunkt zugeordnet ist, und worin das Zugangsmodul dafür konfiguriert ist, dadurch denjenigen IP-MGC (104a-104g) auszuwählen, der dem geografischen Heimatstandort zugeordnet ist.

17. Kommunikationssystem nach Anspruch 16, worin der Absendeendpunkt ein mobiler Endpunkt und dafür konfiguriert ist, die Aufforderung von einem geografischen Roaming-Standort aus zu senden, der sich vom ersten geografischen Standort unterscheidet.

18. Kommunikationssystem nach Anspruch 17, worin die Aufforderung an einen Bestimmungsendpunkt gerichtet ist, der einem dritten geografischen Standort zugeordnet ist, der sich vom geografischen Heimatstandort unterscheidet.

19. Kommunikationssystem nach Anspruch 12, worin das Zugangsmodul betriebsfähig ist, IP-MGCs (104a-104g) iterativ aus einer Liste von IP-MGCs auszuwählen, ohne die Liste an den Absendeendpunkt zu senden.

20. Kommunikationssystem nach Anspruch 12 und umfassend:
ein Kommunikationsnetzwerk;
einen Bestimmungsendpunkt, der betriebsfähig ist, über das Kommunikationsnetzwerk in eine Kommunikationssitzung einzutreten;
den Absendeendpunkt, der dafür konfiguriert ist, eine besagte Kommunikationssitzungsaufforderung auszugeben, die den Bestimmungsendpunkt auffordert, in eine Kommunikationssitzung einzutreten;
die Vielzahl von IP-Mediengatewaycontrollern (IP-MGCs) (104a-104g), die dafür konfiguriert sind, einen Eingang zum Kommunikationsnetzwerk bereitzustellen;
einen oder mehrere Sitzungsgrenzcontroller, wobei jeder Sitzungsgrenzcontroller imstande ist, die Kommunikationssitzungsaufforderung an einen ausgewählten der IP-MGCs (104a-104g) zu richten;
eine Zuordnungsdatenbank, die dafür konfiguriert ist, eine mit Prioritäten versehene Liste von Paaren von Sitzungsgrenzcontrollern und IP-MGCs zu speichern;
eine Kundendatenbank, die dafür konfiguriert ist, eine Liste von Kunden zu speichern, die autorisiert sind, auf das Kommunikationsnetzwerk zuzugreifen; und
eine Vielzahl von Lastverteilern (106a, 106b), worin jeder Lastverteiler ein besagtes Zugangsmodul ist und einen gemeinsamen Schnittstellenpunkt für den Absendeendpunkt bereitstellt, um auf das Kommunikationsnetzwerk zuzugreifen, worin jeder Lastverteiler dafür konfiguriert ist:
die Kommunikationssitzungsaufforderung vom Absendeendpunkt zu empfangen;
auf die Kundendatenbank zuzugreifen, um zu bestimmen, ob der Absendeendpunkt einem Kunden entspricht, der autorisiert ist, auf das Kommunikationsnetzwerk zuzugreifen;
eine oder mehrere dem Absendeendpunkt zugeordnete Eigenschaften, und zwar andere als den aktuellen Standort des Absendeendpunkts, zu verwenden, um einen aus der Vielzahl von IP-MGCs (104a-104g) auszuwählen, über den die Kommunikationssitzungsaufforderung zu leiten ist;
auf die Zuordnungsdatenbank zuzugreifen, um zu bestimmen, welcher der einen oder mehreren Sitzungsgrenzcontroller dem ausgewählten IP-MGC (104a-104g) zugeordnet ist; und
die Kommunikationssitzungsaufforderung über den bestimmten Sitzungsgrenzcontroller an den IP-MGC (104a-104g) zu richten,
wobei die eine oder mehreren Eigenschaften einen halbstationären Standort umfasst, der dem Absendeendpunkt zugeordnet ist, und der aktuelle Standort sich vom halbstationären Standort unterscheidet, worin der halbstationäre Standort ein Standort ist, der sich nicht ändert, wenn der Absendeendpunkt seinen Standort ändert,
wobei das System ferner dafür konfiguriert ist, aus der Kommunikationssitzungsaufforderung den halbstationären Standort zu bestimmen, und worin das Auswählen des einen aus der Vielzahl von IP-MGC (104a-104g) auf dem halbstationären Standort beruht.

21. Kommunikationssystem nach Anspruch 20, worin jeder aus der Vielzahl von Lastverteilern (106a, 106b) unter Verwendung des Protokolls "Open Shortest Path First" (OSPF) eine IP-Adresse gemeinsam nutzt.

22. Kommunikationssystem nach Anspruch 20, worin jeder der einen oder mehreren Sitzungsgrenzcontroller eine Vielzahl von Ports umfasst, worin jeder Port einem der einen oder mehreren IP-MGC (104a-104g) zugeordnet ist.

## Revendications

1. Procédé d'établissement d'une session de communication, le procédé comprenant les étapes ci-dessous consistant à :
recevoir, au niveau d'un équilibreur de charge (106a, 106b), une demande visant à établir une session de communication entre un point d'extrémité initiateur mobile et un point d'extrémité de destination, dans lequel la demande est envoyée à partir d'un serveur de dispositif de communication (110, 112) qui dessert le point d'extrémité initiateur au sein d'un premier emplacement géographique ;
déterminer un chemin dans un réseau de communication au niveau de l'équilibreur de charge (106a, 106b), en sélectionnant un contrôleur de passerelle multimédia IP (IP MGC) (104a-104g) parmi une pluralité de contrôleurs IP MGC, dans lequel la sélection du contrôleur IP MGC (104a-104g) est basée sur des données dans la demande qui sont indépendantes du premier emplacement géographique ; et
établir la session de communication entre le point d'extrémité initiateur et le point d'extrémité de destination à travers le chemin déterminé dans le réseau de communication ;
dans lequel le premier emplacement géographique est différent d'un second emplacement semi-statique associé au point d'extrémité initiateur, dans lequel ledit emplacement semi-statique est un emplacement qui ne change pas lorsque le point d'extrémité initiateur change d'emplacement ;
le procédé comprenant en outre l'étape consistant à déterminer, à partir de la demande, l'emplacement semi-statique, et dans lequel l'étape de sélection du contrôleur IP MGC (104a-104g) est basée sur l'emplacement semi-statique.

2. Procédé selon la revendication 1, dans lequel la détermination du chemin dans le réseau de communication inclut en outre la sélection d'un contrôleur de périphérie de session couplé en communication à l'équilibreur de charge (106a, 106b) et au contrôleur IP MGC sélectionné (104a-104g).

3. Procédé selon la revendication 2, comprenant en outre la sélection d'un port du contrôleur de périphérie de session.

4. Procédé selon la revendication 3, dans lequel la sélection du port comprend la sélection du port associé au contrôleur IP MGC sélectionné (104a-104g).

5. Procédé selon la revendication 1, dans lequel la demande d'établissement d'une session de communication comporte un message d'invite de protocole d'ouverture de session (SIP).

6. Procédé selon la revendication 1, dans lequel les données incluent un identifiant de zone de numérotage (NPA) associé au point d'extrémité initiateur.

7. Support lisible par ordinateur dans lequel sont stockées des instructions exécutables par ordinateur amenant un équilibreur de charge de réseau (106a, 106b) à mettre en oeuvre un procédé d'établissement d'une session de communication, le procédé comprenant les étapes ci-dessous consistant à :
recevoir, au niveau de l'équilibreur de charge (106a, 106b) une demande visant à établir une session de communication ;
déterminer, à partir de la demande, des informations descriptives d'un initiateur de la session de communication ;
sélectionner un serveur de traitement sur la base des informations déterminées descriptives de l'initiateur, indépendamment d'un emplacement en cours de l'initiateur ;
sélectionner un module d'interface, le module d'interface incluant une pluralité de ports (118a-118i) à travers lesquels la session de communication devrait être acheminée ;
déterminer un port de module d'interface (118a-118i) à travers lequel la session de communication devrait être acheminée, dans lequel le port de module d'interface (118a-118i) est associé au serveur de traitement de sessions de communication sélectionné (104a-104g) ; et
acheminer la session de communication, de l'équilibreur de charge (106a, 106b) au serveur de traitement de sessions de communication sélectionné (104a-104g) ;
dans lequel les informations déterminées décrivent un emplacement semi-statique associé à l'initiateur, et l'emplacement semi-statique est différent de l'emplacement en cours, dans lequel ledit emplacement semi-statique est un emplacement qui ne change pas lorsque l'initiateur change d'emplacement ;
le procédé comprenant en outre l'étape consistant à déterminer, à partir de la demande, l'emplacement semi-statique, et dans lequel la sélection du serveur de traitement est basée sur l'emplacement semi-statique.

8. Support lisible par ordinateur selon la revendication 7, dans lequel le procédé comporte en outre les étapes ci-dessous consistant à :
déterminer si l'acheminement de la session de communication vers le serveur de traitement de sessions de communication sélectionné (104a-104g) a réussi ;
sélectionner un serveur de traitement de communication alternatif et un module d'interface alternatif (108) si l'acheminement de la session de communication a échoué ; et
réacheminer la session de communication, de l'équilibreur de charge (106a, 106b) vers le serveur de traitement de communication alternatif (104a-104g), à travers le module d'interface alternatif (108).

9. Support lisible par ordinateur selon la revendication 7, dans lequel le procédé comporte en outre les étapes ci-dessous consistant à :
émettre une invitation de session de communication, de l'équilibreur de charge (106a, 106b) au serveur de traitement sélectionné (104a-104g), à travers le module d'interface sélectionné ;
attendre la fin de temporisation de l'invitation de session de communication ;
sélectionner un serveur de traitement de communication alternatif (104a-104g) et un module d'interface alternatif (108) en cas de fin de temporisation de l'invitation de session de communication ; et
réacheminer la session de communication, de l'équilibreur de charge (106a, 106b) vers le serveur de traitement de communication alternatif (104a-104g), à travers le module d'interface alternatif (108).

10. Support lisible par ordinateur selon la revendication 9, dans lequel le réacheminement de la session de communication est mis en oeuvre au moins en partie sur la base des informations contenues dans des informations de message de signalisation associées à l'invitation de communication.

11. Support lisible par ordinateur selon la revendication 9, dans lequel le réacheminement de la session de communication est mis en oeuvre, au moins en partie sur la base d'informations contenues dans un ou plusieurs messages de signalisation associés à l'invitation de communication.

12. Système de communication comprenant :
une pluralité de contrôleurs de passerelle multimédia IP (IP MGC) (104a-104g) ;
un module d'interface incluant des ports, dans lequel chaque port est associé, et couplé en communication, au contrôleur de la pluralité de contrôleurs IP MGC (104a-104g) ; et
un module d'accès (106a, 106b) configuré de manière à recevoir une demande de communication en provenance d'un point d'extrémité initiateur, dans lequel le module d'accès (106a, 106b) est configuré de manière à sélectionner un contrôleur de la pluralité de contrôleurs IP MGC (104a-104g), sur la base d'un paramètre associé au point d'extrémité initiateur, dans lequel le paramètre est indépendant d'un emplacement géographique en cours du point d'extrémité initiateur ;
dans lequel le paramètre comporte un emplacement semi-statique associé au point d'extrémité initiateur et l'emplacement géographique en cours est différent de l'emplacement semi-statique, dans lequel ledit emplacement semi-statique est un emplacement qui ne change pas lorsque le point d'extrémité initiateur change d'emplacement ;
le système étant en outre configuré de manière à déterminer, à partir de la demande de communication, l'emplacement semi-statique, et dans lequel la sélection du contrôleur de la pluralité de contrôleurs IP MGC est basée sur l'emplacement semi-statique.

13. Système de communication selon la revendication 12, dans lequel le module d'accès (106a, 106b) est l'un d'une pluralité de modules d'accès, dans lequel chaque module de la pluralité de modules d'accès partage une adresse de protocole Internet (IP) en utilisant le protocole d'ouverture prioritaire du plus court chemin (OSPF).

14. Système de communication selon la revendication 12, dans lequel le module d'accès est l'un d'une pluralité de modules d'accès (106a, 106b), et dans lequel le système est configuré de manière à utiliser un serveur de noms de domaines (DNS) en vue de déterminer vers quel module de la pluralité de modules d'accès (106a, 106b) la demande de communication devrait être acheminée.

15. Système de communication selon la revendication 12, dans lequel chacun des contrôleurs IP MGC (104a-104g) est associé à de multiples serveurs, le système comprenant en outre au moins un équilibreur de charge interne, logiquement positionné entre le module d'interface et la pluralité de contrôleurs IP MGC (104a-104g), configuré de manière à équilibrer de multiples demandes de communication à travers les multiples serveurs associés au contrôleur IP MGC (104a-104g).

16. Système de communication selon la revendication 12, dans lequel le paramètre associé au point d'extrémité initiateur est un paramètre géographique indiquant un emplacement géographique résidentiel associé au point d'extrémité initiateur, et dans lequel le module d'accès est configuré de manière à sélectionner par conséquent le contrôleur IP MGC (104a-104g) associé à l'emplacement géographique résidentiel.

17. Système de communication selon la revendication 16, dans lequel le point d'extrémité initiateur est un point d'extrémité mobile, et est configuré de manière à envoyer la demande à partir d'un emplacement géographique itinérant différent du premier emplacement géographique.

18. Système de communication selon la revendication 17, dans lequel la demande est dirigée vers un point d'extrémité de destination associé à un troisième emplacement géographique différent de l'emplacement géographique résidentiel.

19. Système de communication selon la revendication 12, dans lequel le module d'accès est exploitable de manière à sélectionner, de façon itérative, des contrôleurs IP MGC (104a-104g) à partir d'une liste de contrôleurs IP MGC, sans envoyer la liste au point d'extrémité initiateur.

20. Système de communication selon la revendication 12, et comprenant :
un réseau de communication ;
un point d'extrémité de destination exploitable de manière à entrer dans une session de communication sur le réseau de communication ;
le point d'extrémité initiateur étant configuré de manière à émettre une dite demande de session de communication demandant au point d'extrémité de destination d'entrer dans une session de communication ;
la pluralité de contrôleurs de passerelle multimédia IP (IP MGC) (104a-104g) étant configurée de manière à fournir une entrée dans le réseau de communication ;
un ou plusieurs contrôleurs de périphérie de session, chaque contrôleur de périphérie de session étant apte à diriger la demande de session de communication vers un contrôleur sélectionné parmi les contrôleurs IP MGC (104a-104g) ;
une base de données d'associations configurée de manière à stocker une liste hiérarchisée de paires de contrôleurs de périphérie de session et de contrôleurs IP MGC ;
une base de données de clients configurée de manière à stocker une liste de clients autorisés à accéder au réseau de communication ; et
une pluralité d'équilibreurs de charge (106a, 106b), dans lequel chaque équilibreur de charge est un dit module d'accès et fournit un point d'interface commun permettant au point d'extrémité initiateur d'accéder au réseau de communication, dans lequel chaque équilibreur de charge est configuré de manière à :
recevoir la demande de session de communication en provenance du point d'extrémité initiateur ;
accéder à la base de données de clients en vue de déterminer si le point d'extrémité initiateur correspond à un client qui est autorisé à accéder au réseau de communication ;
utiliser une ou plusieurs propriétés associées au point d'extrémité initiateur, distinctes de l'emplacement en cours du point d'extrémité initiateur, en vue de sélectionner un contrôleur de la pluralité de contrôleurs IP MGC (104a-104g) à travers lequel acheminer la demande de communication ;
accéder à la base de données d'associations en vue de déterminer quel contrôleur de périphérie de session dudit un ou desdits plusieurs contrôleurs de périphérie de session est associé au contrôleur IP MGC sélectionné (104a-104g) ; et
diriger la demande de session de communication, à travers le contrôleur de périphérie de session déterminé, vers le contrôleur IP MGC (104a-104g) ;
dans lequel ladite une ou lesdites plusieurs propriétés comportent un emplacement semi-statique associé au point d'extrémité initiateur et l'emplacement en cours est différent de l'emplacement semi-statique, dans lequel ledit emplacement semi-statique est un emplacement qui ne change pas lorsque le point d'extrémité initiateur change d'emplacement ;
le système étant en outre configuré de manière à déterminer, à partir de la demande de session de communication, l'emplacement semi-statique, et dans lequel la sélection du contrôleur de la pluralité de contrôleurs IP MGC (104a-104g) est basée sur l'emplacement semi-statique.

21. Système de communication selon la revendication 20, dans lequel chaque équilibreur de la pluralité d'équilibreurs de charge (106a, 106b) partage une adresse IP en utilisant le protocole d'ouverture prioritaire du plus court chemin (OSPF).

22. Système de communication selon la revendication 20, dans lequel chaque contrôleur dudit un ou desdits plusieurs contrôleurs de périphérie de session comporte une pluralité de ports, dans lequel chaque port est associé à l'un dudit un ou desdits plusieurs contrôleurs IP MGC (104a-104g).
